# EUROPÄISCHE PATENTSCHRIFT

(11) **EP 1 903 436 B1**
(45) Veröffentlichungstag und Bekanntmachung des Hinweises auf die Patenterteilung: **30.05.2018**
(21) Anmeldenummer: 07011055.6
(22) Anmeldetag: 05.06.2007
(51) Int. Cl.: G06F 11/16, G06F 11/20, G06F 9/445, G06F 11/14

(54) **Computersystem und Verfahren zum Aktualisieren von Programmcode**
Computer system and method for updating program code
Système informatique et procédé destiné à l'actualisation de codes de programmes

(30) Priorität: 18.09.2006 DE 102006043636
(43) Veröffentlichungstag der Anmeldung: 26.03.2008
(73) Patentinhaber: Fujitsu Limited, Kawasaki-shi Kanagawa 211-8588 (JP)
(72) Erfinder: Karpa, Wolfgang, 33129 Delbrück (DE)
(74) Vertreter: Epping - Hermann - Fischer

(56) Entgegenhaltungen:
- DE-A1- 10 346 278
- DE-A1- 19 525 105
- US-B1- 6 223 336

## Beschreibung

Die Erfindung betrifft ein Computersystem aufweisend einen Prozessor zum Ausführen von Programmcode, einen ersten nicht-flüchtigen Speicher zum Speichern von ersten Programmcode zum Starten des Computersystems, wobei der erste nicht-flüchtige Speicher funktionsfähig mit dem Prozessor verbunden ist, eine Netzwerkschnittstelle zum Verbinden des Computersystems mit einem Netzwerk. Die Erfindung betrifft außerdem eine Verwendung eines zweiten nicht-flüchtigen Speichers eines Systemüberwachungsbausteins in einem Verfahren zum Aktualisieren von Programmcode zum Starten eines Computersystems sowie ein Computerprogramm.

Computersysteme der oben genannten Art sind beispielsweise aus der deutschen Patentschrift DE 103 59 684 B4 bekannt. Insbesondere Server-Computer weisen oftmals einen Systemüberwachungsbaustein, auch genannt Baseboard-Management-Controller (BMC), auf, der zur Überwachung der korrekten Funktion des überwachten Computersystems dient. Auf diese Weise können Fehler des Computersystems schnell und sicher erkannt werden und somit eine hohe Zuverlässigkeit des betreffenden Computersystems erreicht werden.

Eine besonders kritische Komponente von Computersystemen bildet das so genannte BIOS (Basic Input Output System), das Programmcode zum Starten des Computersystems enthält. Tritt bei der Ausführung des BIOS-Programmcodes ein Fehler auf, kann das Computersystem nicht mehr arbeiten. Ein solcher Fehler ist insbesondere auch nicht durch ein Zurücksetzen, auch genannt Reset, des Computersystems zu beheben.

Fehler in dem BIOS-Programm können unter anderem bei dessen Aktualisierung auftreten, beispielsweise wenn ein Aktualisierungsvorgang nicht erfolgreich zu Ende geführt wird oder versehentlich eine für das jeweilige Computersystem ungeeignete BIOS-Version gespeichert wird. Ein nachfolgender Start des Computersystems und damit das Ausführen des fehlerhaften BIOS-Programmcodes führt in der Regel zu einem Fehler, der nur durch verhältnismäßig aufwendige Maßnahmen behoben werden kann.

Beispielsweise ist es möglich, einen Speicherbaustein, der den BIOS-Programmcode enthält, durch einen anderen Speicherbaustein mit korrektem BIOS-Programmcode zu ersetzen. Alternativ ist es auch bekannt, beim Systemstart einem Benutzer des Computersystems die Möglichkeit zu geben, neuen Programmcode zum Starten des Computersystems einzuspielen, beispielsweise über einen so genannten USB-Speicherstick.

Beide Verfahren sind jedoch verhältnismäßig aufwändig und verhindern insbesondere eine Fernwartung des Computersystems. Gerade bei Server-Computern, bei denen es auf eine hohe Zuverlässigkeit des Computersystems ankommt und die oftmals nicht in unmittelbarer Reichweite eines Benutzers aufgestellt sind, besteht daher ein Bedarf für verbesserte Computersysteme und Verfahren, die eine einfache und sichere Aktualisierung von Programmcode zum Starten des Computersystems gestatten. Insbesondere soll eine Aktualisierung keinen manuellen Eingriff in das Computersystem erfordern und bevorzugt aus der Ferne durchführbar sein.

Aus der DE 195 25 105 ist ein weiteres, gattungsbildendes Informationsverarbeitungssystem bekannt, dass in der Lage ist, ein Basisein-/-ausgabesystem (BIOS) Programm ohne Unterbrechung oder Stoppen des Betriebs des Systems zu aktualisieren. Hierzu umfasst das Informationsverarbeitungssystem einen Update-Programmspeicher und ein BIOS-Update-Flag. Eine Systemladeanordnung kopiert das in dem Update-Programmspeicher gespeicherte Update-BIOS-Programm in einem Speicherbereich des Hauptspeichers, wenn das BIOS-Update-Flag beim Laden des Betriebssystems gesetzt ist (d. h. wenn das Informationsverarbeitungssystem eingeschaltet oder zurückgesetzt wird). Wenn ein BIOS-Speicher nicht normal aktiviert wurde oder wenn ein Prüfsummentest für das im BIOS-Speicher eingeschriebene Programm nicht normal beendet wurde und keine Aktualisierung des BIOS-Programms angezeigt wird, wird eine Fehlermeldung angezeigt, da es unmöglich ist, das System wiederherzustellen.

Die oben genannten und weitere Probleme werden durch ein Computersystem der oben genannten Art gelöst, das durch einen Systemüberwachungsbaustein gekennzeichnet ist, der mit dem Prozessor, der Netzwerkschnittstelle und dem ersten nicht-flüchtigen Speicher funktionsfähig verbunden und zur Überwachung der korrekten Funktion und zur Fernwartung des Computersystems über das Netzwerk eingerichtet ist. Dabei weist der Systemüberwachungsbaustein einen zweiten nicht-flüchtigen Speicher in Form eines ROM- oder Flashspeichers zum Speichern von zweitem Programmcode zum Starten des Computersystems auf und ist dazu eingerichtet ist festzustellen, ob der Prozessor nach einer vorbestimmten Zeit mit der Ausführung eines Betriebssystem des Computersystems beginnt und beim Feststellen, dass der Prozessor (2) nach der vorbestimmten Zeit nicht mit der Ausführung des Betriebssystems beginnt, den zweiten Programmcode aus dem zweiten nicht-flüchtigen Speicher in den ersten nicht-flüchtigen Speicher zu kopieren, so dass der zweite Programmcode den ersten Programmcode ersetzt und für einen nachfolgenden Start des Computersystems zur Verfügung steht.

Erfindungsgemäß hält der Systemüberwachungsbaustein zweiten Programmcode zum Starten des Computersystems bereit, der beispielsweise im Fehlerfall den ersten Programmcode des Computersystems ersetzen kann. Wird beim Starten des Computersystems erkannt, dass ein schwerer Fehler vorliegt, weil der Systemüberwachungsbaustein feststellt, dass der Prozessor nach einer vorbestimmten Zeit nicht mit der Ausführung eines Betriebssystems beginnt, wird durch den Systemüberwachungsbaustein der zweite Programmcode des zweiten nicht-flüchtigen Speichers in den ersten nicht-flüchtigen Speicher kopiert. Auf diese Weise wird sichergestellt, dass stets funktionsfähiger Programmcode zum Starten des Computersystems bereitsteht, ohne dass hierzu ein manueller Eingriff in das Computersystem nötig ist.

Gemäß einer bevorzugten Ausgestaltung der Erfindung weist der erste nicht-flüchtige Speicher zusätzlich einen unveränderlichen Speicherbereich auf, in dem Programmcode für einen Bootblock gespeichert ist. Gemäß einer weiteren Ausgestaltung umfasst der Programmcode des, Bootblocks eine Integritätsprüfung für den ersten Programmcode, wobei bei erfolgloser Integritätsprüfung zunächst der zweite Programmcode in den ersten nicht-flüchtigen Speicher kopiert und dann ausgeführt wird.

Durch das Aufteilen des ersten nicht-flüchtigen Speichers in einen unveränderlichen Speicherbereich für einen Bootblock und einen veränderlichen Speicherbereich für den ersten Programmcode, kann beim Starten des Computersystems eine Integritätsprüfung für den ersten Programmcode durchgeführt werden. Je nachdem, ob die Integritätsprüfung erfolgreich verläuft oder nicht, kann dann entweder der erste Programmcode ausgeführt werden oder der zweite Programmcode zunächst in den ersten nicht-flüchtigen Speicher kopiert und dann ausgeführt werden.

Gemäß einer weiteren vorteilhaften Ausgestaltung sind in dem ersten und/oder zweiten nicht-flüchtigen Speicher Versionsinformationen des ersten und zweiten Programmcodes gespeichert. In dem Fall, dass der zweite Programmcode aktueller als der erste Programmcode ist, wird beim Starten des Computersystems der zweite Programmcode durch den Systemüberwachungsbaustein in den ersten nicht-flüchtigen Speicher kopiert.

Durch das automatische Kopieren von aktuellem Programmcode aus dem zweiten nicht-flüchtigen Speicher in den ersten nicht-flüchtigen Speicher kann sichergestellt werden, dass das Computersystem jeweils die aktuellste zur Verfügung stehende Version des Programmcodes zum Starten des Computersystems verwendet.

Gemäß einer weiteren vorteilhaften Ausgestaltung ist der Systemüberwachungsbaustein dazu eingerichtet, über die Netzwerkschnittstelle empfangenen Programmcode als zweiten Programmcode in dem zweiten nicht-flüchtigen Speicher zu speichern. Durch die Kopplung des Systemüberwachungsbausteins mit einer Netzwerkschnittstelle wird eine Fernwartung des Computersystems ermöglicht.

Gemäß einer weiteren vorteilhaften Ausgestaltung umfasst das Computersystem ein Netzteil mit einem Bereitschaftsmodus, wobei in dem Bereitschaftsmodus wenigstens der Systemüberwachungsbaustein und die Netzwerkschnittstelle mit einer Betriebsspannung versorgt wird, so dass eine Aktualisierung des zweiten Programmcodes in dem Bereitschaftsmodus durchführbar ist. Somit kann eine Aktualisierung des Programmcodes zum Starten des Computersystems selbst bei abgeschalteten Computersystem durchgeführt werden.

Das der Erfindung zugrunde liegende Problem wird ebenso durch eine Verwendung eines zweiten nicht-flüchtigen Speichers eines Systemüberwachungsbausteins in einem Computersystem, aufweisend einen Prozessor zum Ausführen von Programmcode, einen ersten nicht-flüchtigen Speicher zum Speichern von erstem
- Ausführen von Programmcode eines Bootblocks aus dem ersten nicht-flüchtigen Speicher durch den Prozessor,
- Überprüfen, ob eine vorbestimmte Bedingung erfüllt ist, durch eine Datenverarbeitungseinheit des Systemüberwachungsbausteins, wobei im Schritt des Überprüfens ein Wiederherstellungsanzeiger überprüft wird,
- Ausführen von erstem Programmcode zum Starten des Computersystems aus dem ersten nicht-flüchtigen Speicher durch den Prozessor, wenn die vorbestimmte Bedingung nicht erfüllt ist,
- Setzen des Wiederherstellungsanzeigers durch den Systemüberwachungsbaustein bei einem erfolglosen Start des Computersystems und
- Kopieren von zweitem Programmcode zum Starten des Computers aus dem zweiten nicht-flüchtigen Speicher in ersten nicht-flüchtigen Speicher durch eine Datenverarbeitungseinheit des Systemüberwachungsbausteins und Ausführen des zweiten Programmcodes, wenn die vorbestimmte Bedingung erfüllt ist, durch den Prozessor.

Durch das Verfahren wird sichergestellt, dass stets einer der beiden gespeicherten Programmcodes zum Starten des Computersystems ausgeführt wird.

Dabei wird im Schritt des Überprüfens ein Wiederherstellungsanzeiger überprüft und bei einem erfolglosen Start des Computersystems der Wiederherstellungsanzeiger durch den Systemüberwachungsbaustein gesetzt.

Sollte der Systemüberwachungsbaustein erkennen, dass ein Start des Computersystems nicht erfolgreich durchgeführt werden konnte, wird bei einem nachfolgenden Neustart des Computersystems durch Überprüfen des Wiederherstellungsanzeigers bewirkt, dass der zweite Programmcode aus dem zweiten nicht-flüchtigen Speicher in den ersten nicht-flüchtigen Speicher kopiert wird, so dass das Computersystem nachfolgend wieder erfolgreich gestartet werden kann.

Gemäß einer weiteren vorteilhaften Ausgestaltung umfasst das Verfahren zusätzlich die Schritte:
- Übertragen von aktualisiertem Programmcode an den Systemüberwachungsbaustein,
- Speichern des aktualisierten Programmcodes als zweiter Programmcode in dem Systemüberwachungsbaustein und
- Setzen des Wiederherstellungsanzeigers.

Durch die zusätzlichen Schritte wird bewirkt, dass der Wiederherstellungsanzeiger im Falle einer Aktualisierung des zweiten Programmcodes des zweiten nicht-flüchtigen Speichers gesetzt wird, so dass beim nächsten Neustart des Computersystems auch ohne vorheriges Auftreten eines Fehlers der Programmcode zum Starten des Computersystems aktualisiert wird.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine schematische Darstellung eines Computersystems,
- Figur 2: ein Ablaufdiagramm eines Verfahrens zum Aktualisieren von Programmcode.

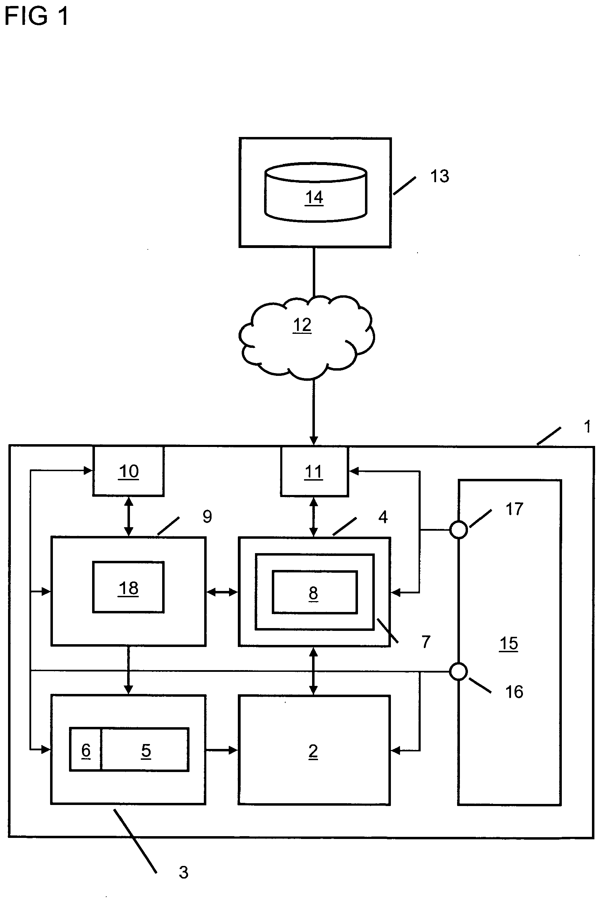

Figur 1 zeigt ein Computersystem 1 mit einem Prozessor 2, einem ersten nicht-flüchtigen Speicher 3 und einem Systemüberwachungsbaustein 4. Der Systemüberwachungsbaustein 4 überwacht unter anderem die Funktion des Prozessors 2.

Beim Starten des Computersystems 1 führt der Prozessor 2 ersten Programmcode 5 aus, der in dem ersten nicht-flüchtigen Speicher 3 gespeichert ist. Zusätzlich ist in dem ersten nicht-flüchtigen Speicher 3 Programmcode für einen Bootblock 6 gespeichert. Der Programmcode des Bootblocks 6 wird beim Starten des Computersystems 1 zu allererst ausgeführt und beinhaltet in dem Ausführungsbeispiel auch eine Integritätsprüfung für den ersten Programmcode 5.

Der Systemüberwachungsbaustein 4 enthält einen zweiten nicht-flüchtigen Speicher 7, beispielsweise einen ROM- oder Flash-baustein, in dem zweiter Programmcode 8 zum Starten des Computersystems 1 gespeichert ist. Bei dem zweiten Programmcode 8 kann es sich beispielsweise um eine redundante Kopie des ersten Programmcodes 5 handeln, um eine ursprünglich mit dem Computersystem 1 ausgelieferte Fassung des Programmcodes zum Starten des Computersystems 1 oder um eine aktualisierte Fassung des Programmcodes.

Wird beim Starten des Computersystems 1 erkannt, dass ein schwerer Fehler vorliegt, beispielsweise weil durch den Programmcode des Bootblock 6 erkannt wird, dass der erste Programmcode 5 fehlerhaft ist, oder weil der Systemüberwachungsbaustein 4 feststellt, dass der Prozessor 2 nach einer vorbestimmten Zeit nicht mit der Ausführung eines Betriebssystems beginnt, wird durch den Systemüberwachungsbaustein 4 der zweite Programmcode 8 des zweiten nicht-flüchtigen Speichers 7 in den ersten nicht-flüchtigen Speicher 3 kopiert.

Hierzu umfasst das Computersystem 1 eine Programmiervorrichtung 9, mit deren Hilfe der erste nicht-flüchtigen Speicher 3 und insbesondere der darin gespeicherte erste Programmcode 5 überschrieben werden kann. Beispielsweise handelt es sich bei dem ersten nicht-flüchtigen Speicher 3 um einen so genannten Flash-Baustein, der mit Hilfe einer durch die Programmiervorrichtung 9 erzeugten Programmierspannung beschrieben werden kann.

Um festzustellen, on eine Aktualisierung des ersten Programmcodes 5 durch die Programmiervorrichtung 9 nötig ist, umfasst des Computersystem 1 zusätzlich einen Wiederherstellungsanzeiger 18, auf den der Systemüberwachungsbaustein 4 zugreifen kann. Der Wiederherstellungsanzeiger 18 kann beispielsweise in dem ersten oder zweiten nicht-flüchtigen Speicher 3 oder 7 ausgebildet sein oder, wie in Figur 1 dargestellt, unabhängig davon. Beispielsweise kann auch ein elektrischer Schalter oder eine Software-Anweisung dazu eingesetzt werden, manuell eine Aktualisierung des erste Programmcodes 5 einzuleiten.

Um eine Programmierung des ersten nicht-flüchtigen Speichers 3 auch unabhängig von dem Systemüberwachungsbaustein 4 zu ermöglichen, ist die Programmiervorrichtung 9 zusätzlich mit einer Schnittstelle 10 verbunden, über die ebenfalls Programmcode zum Starten des Computersystems 1 bereitgestellt werden kann. Bei der Schnittstelle 10 kann es sich beispielsweise um eine USB-Schnittstelle oder um eine Schnittstelle zum Anschluss eines Diskettenlaufwerks handeln, über die Programmcode zum Starten des Computersystems 1 manuell in das Computersystem 1 eingespielt werden kann.

Um jedoch auch eine Fernwartung des Computersystems 1 zu ermöglichen, weist das Computersystem 1 zusätzlich eine Netzwerkschnittstelle 11 auf, über die das Computersystem 1 über ein Netzwerk 12 mit einem Fernwartungssystem 13 verbunden ist. In dem dargestellten Ausführungsbeispiel umfasst das Fernwartungssystem 13 eine Datenbank 14 mit Programmcode zum Starten des Computersystems 1. Beispielsweise kann es sich bei der Datenbank 14 um eine Datenbank eines Computerherstellers oder einer Wartungsfirma handeln, die eine Vielzahl von unterschiedlichen Programmcodes zum Starten von unterschiedlichen Computersystemen 1 bereithält.

Das Computersystem 1 umfasst im Ausführungsbeispiel ein Netzteil 15, das in einem normalen Betriebsmodus sämtliche Komponenten des Computersystems 1 über einen ersten Anschluss 16 des Netzteils 15 mit einer Betriebsspannung versorgt. In einem so genannten Stand-by- oder Bereitschaftsmodus wird jedoch nur der Systemüberwachungsbaustein 4 und die Netzwerkschnittstelle 11 über einen zweiten Anschluss 17 des Netzteils 15 mit einer Betriebsspannung versorgt.

Auf diese Weise ist sichergestellt, dass selbst bei abgeschaltetem Computersystem 1 der in dem zweiten nicht-flüchtigen Speicher 7 gespeicherte zweite Programmcode 8 von dem Fernwartungssystem 13 aktualisiert werden kann. Somit steht der aktualisierte zweite Programmcode 8 beim nächsten Einschalten des Computersystems 1 zur Verfügung.

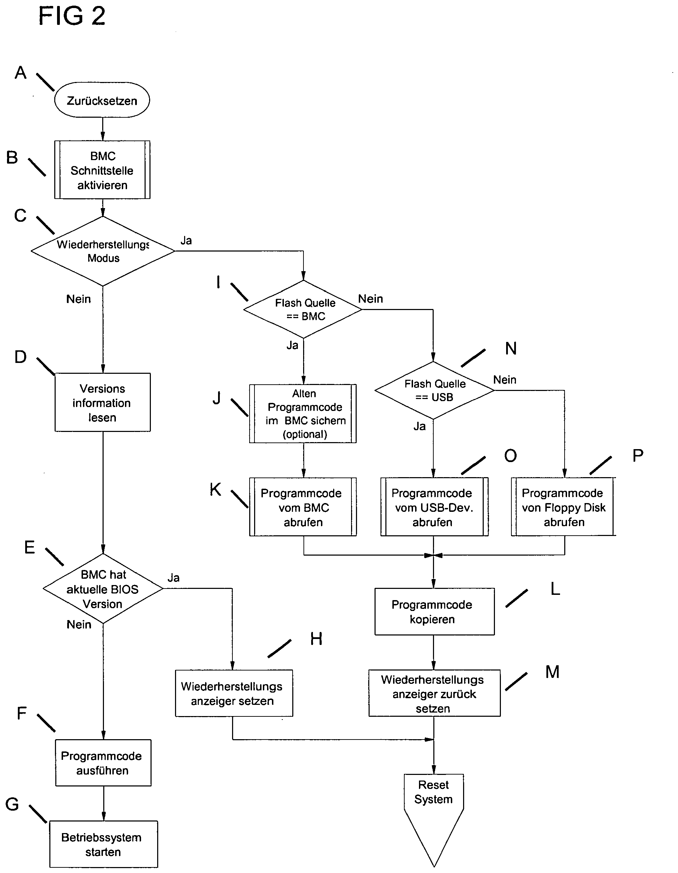

Der Vorgang des Aktualisieren des Programmcodes zum Starten des Computersystems 1 wird im folgenden anhand des Ablaufdiagramms der Figur 2 näher beschrieben.

In einem ersten Schritt A wird das Computersystem 1 zurückgesetzt. Dabei kann es sich beispielsweise um einen hard- oder softwaremäßig herbeigeführten, so genannten Reset handeln oder um das Einschalten des Computersystems 1.

In einem Schritt B wird eine Überwachungsschnittstelle des Systemüberwachungsbausteins 4 aktiviert. Beispielsweise erkennt der Systemüberwachungsbaustein 4, dass das Netzteil 15 in einen Betriebsmodus geschaltet wurde und der Prozessor 2 somit mit einer Betriebsspannung versorgt wird.

In dem Ausführungsbeispiel überprüft der Systemüberwachungsbaustein 4 in einem Schritt C, ob er sich in einem so genannten Recovery-Modus befindet. Dies kann beispielsweise durch Abfrage eines in dem ersten nicht-flüchtigen Speicher 3 oder dem zweiten nicht-flüchtigen Speicher 7 befindlichen Wiederherstellungsanzeigers 18 durchgeführt werden. Alternativ ist es auch möglich, dass diese Überprüfung durch Programmcode des Bootblocks 6 bei der Ausführung durch den Prozessor 2 durchgeführt wird.

Befindet sich das Computersystem 1 nicht in dem Recovery-Modus, werden in einem nachfolgenden Schritt D Versionsinformationen des ersten Programmcodes 5 und des zweiten Programmcodes 8 eingelesen. Diese können beispielsweise jeweils an einer vorbestimmten Adresse des ersten und/oder zweiten nicht-flüchtigen Speichers 3 bzw. 7 abgelegt sein.

In einem nachfolgen Schritt E werden die eingelesenen Versionsinformationen mit einander verglichen. Dabei können sowohl Datums- als auch andere Informationen miteinander verglichen werden, so dass sichergestellt werden kann, das der erste bzw. zweite Programmcode 5 bzw. 8 mit dem Computersystem 1 kompatibel ist.

Ist der in dem ersten nicht-flüchtigen Speicher 3 gespeicherte erste Programmcode 5 aktuell, wird in einem Schritt F das Starten des Computersystems 1 durch Ausführen des ersten Programmcodes 5 aus dem ersten Speicher 3 fortgesetzt. Dabei werden beispielsweise weitere so genannter POST (Power On Self Test) Routinen ausgeführt.

Danach wird in einem Schritt G ein Betriebssystem zur Ausführung auf dem Computersystem 1 gestartet. Durch Start des Betriebssystem kann der Überwachungsbaustein 4 erkennen, dass der Start des Computersystems 1 ohne schweren Fehler abgeschlossen wurde.

Wird im Schritt E jedoch erkannt, dass in dem zweiten nicht-flüchtigen Speicher 7 eine aktuellere Fassung des Programmcodes zum Starten des Computersystems 1 gespeichert ist als in dem ersten nicht-flüchtigen Speicher 3, wird in einem Schritt H durch den Systemüberwachungsbaustein 4 der Wiederherstellungsanzeiger 18 gesetzt, so dass sich das Computersystems 1 bei einem nachfolgenden Neustart in dem Recovery-Modus befindet.

Wird dies im Schritt C erkannt, wird in einem nachfolgenden Schritt I überprüft, ob der Systemüberwachungsbaustein 4 als Quelle zum Aktualisieren des ersten nicht-flüchtigen Speichers 3 gewählt ist. Beispielsweise kann es sich hierbei um eine Einstellung handeln, die in dem ersten nicht-flüchtigen Speicher 3 oder dem zweiten nicht-flüchtigen Speicher 7 abgelegt ist.

Wurde der Systemüberwachungsbaustein 4 als Quelle für die Aktualisierung gewählt, beispielsweise weil zuvor ein aktualisierter zweiter Programmcode 8 von einem Fernwartungssystem 13 in den zweiten nicht-flüchtigen Speicher 7 übertragen wurde, wird in einem optionalen Schritt J zunächst der bestehende erste Programmcode 5 in dem zweiten nicht-flüchtigen Speicher 7 gesichert. Ob der optionale Schritt J ausgeführt wird, hängt insbesondere davon ab, wie viel Speicherkapazität der zweite nicht-flüchtigen Speicher 7 besitzt. Eine Sicherung des ersten Programmcodes 5 bietet sich insbesondere dann an, wenn ausreichend freier Speicher in dem zweiten nicht-flüchtigen Speicher 7 zur Verfügung steht, um mehrere Versionen des Programmcodes zum Starten des Computersystems 1 vorzuhalten.

In einem Schritt K wird der zweite Programmcode (8) zum Starten des Computersystems 1 aus dem zweiten nicht-flüchtigen Speicher 7 abgerufen. Dabei kann es sich beispielsweise um eine gerade über das Fernwartungssystem 13 aktualisierte Fassung des Programmcodes oder um eine in dem zweiten nicht-flüchtigen Speicher 7 abgelegte alte, funktionsfähige Fassung handeln. Falls mehrere, unterschiedliche Versionen des zweiten Programmcodes in dem zweiten Speicher 7 abgelegt sind, kann eine zu verwendende Version automatisch oder durch Benutzerauswahl ausgewählt werden.

In einem Schritt L wird die im Schritt K abgerufene Fassung des zweiten Programmcodes 8 in den ersten nicht-flüchtigen Speicher 3 kopiert. Dazu wird in dem Ausführungsbeispiel der zweite Programmcode 8 an die Programmiervorrichtung 9 übertragen, die ihrerseits den ersten Programmcode 5 mit dem zweiten Programmcode 8 überschreibt. Der Bootblock 6 des ersten nicht-flüchtigen Speichers 3 bleibt davon unberührt.

In einem weiteren Schritt M wird der Wiederherstellungsanzeiger 18 zurückgesetzt, so dass nach einem erneuten Neustart des Computersystems 1 im Schritt C erkannt wird, dass die Wiederherstellung des ersten Programmcodes 5 zum Starten des Computersystems erfolgreich durchgeführt wurde.

Wurde im Schritt I erkannt, dass nicht der Systemüberwachungsbaustein 4 als Quelle für die Aktualisierung des ersten nicht-flüchtigen Speichers 3 verwendet werden soll, wird in einem Schritt N abgeprüft, ob die Schnittstelle 10, im Ausführungsbeispiel eine USB-Schnittstelle, als Quelle verwendet werden soll.

Ist dies der Fall, wird in einem Schritt O Programmcode zum Aktualisieren des ersten nicht-flüchtigen Speichers 3 von einer USB-Speichervorrichtung empfangen. Dieser ersetzt im Schritt L den ersten Programmcode 5 des ersten nicht-flüchtigen Speichers 3 durch Kopieren. Auch der Schritt M wird ausgeführt, um den Wiederherstellungsanzeiger 18 zurückzusetzen.

Andernfalls, d. h. wenn im Schritt N eine andere Quelle erkannt wurde, wird in einem Schritt P von einer anderen Quelle, zum Beispiel einem Floppy-Laufwerk, angefordert und im Schritt L in den ersten nicht-flüchtigen Speicher 3 kopiert, bevor der Wiederherstellungsanzeiger 18 im Schritt M zurückgesetzt wird.

Alternativ können auch andere Maßnahme zum Aktualisieren des ersten nicht-flüchtigen Speichers 2 durchgeführt werden. Beispielsweise kann es in besonderen Fällen nötig sein, den ersten nicht-flüchtigen Speicher 3 durch einen anderen Speicherbaustein zu ersetzen.

### Bezugszeichenliste

- 1: Computersystem
- 2: Prozessor
- 3: erster nicht-flüchtigen Speicher
- 4: Systemüberwachungsbaustein
- 5: erster Programmcode
- 6: Bootblock
- 7: zweiter nicht-flüchtigen Speicher
- 8: zweiter Programmcode
- 9: Programmiervorrichtung
- 10: Schnittstelle
- 11: Netzwerkschnittstelle
- 12: Netzwerk
- 13: Fernwartungssystem
- 14: Datenbank
- 15: Netzteil
- 16: erster Anschluss
- 17: zweiter Anschluss
- 18: Wiederherstellungsanzeiger

- A - P: Verfahrensschritte

## Patentansprüche

1. Computersystem (1) aufweisend
- einen Prozessor (2) zum Ausführen von Programmcode,
- einen ersten nicht-flüchtigen Speicher (3) zum Speichern von erstem Programmcode (5) zum Starten des Computersystems (1), wobei der erste nicht-flüchtige Speicher (3) funktionsfähig mit dem Prozessor (2) verbunden ist, und
- eine Netzwerkschnittstelle (11) zum Verbinden des Computersystems (1) mit einem Netzwerk (12),
**gekennzeichnet durch**
- einen Systemüberwachungsbaustein (4), der mit dem Prozessor (2), der Netzwerkschnittstelle (11) und dem ersten nicht-flüchtigen Speicher (3) funktionsfähig verbunden ist und zur Überwachung der korrekten Funktion und zur Fernwartung des Computersystems (1) über das Netzwerk (12) eingerichtet ist,
wobei
- der Systemüberwachungsbaustein (4) einen zweiten nicht-flüchtigen Speicher (7) in Form eines ROM- oder Flashspeichers zum Speichern von zweitem Programmcode (8) zum Starten des Computersystems (1) aufweist und
- der Systemüberwachungsbaustein (4) dazu eingerichtet ist festzustellen, ob der Prozessor (2) nach einer vorbestimmten Zeit mit der Ausführung eines Betriebssystem des Computersystems (1) beginnt, und beim Feststellen, dass der Prozessor (2) nach der vorbestimmten Zeit nicht mit der Ausführung des Betriebssystems beginnt, den zweiten Programmcode (8) aus dem zweiten nicht-flüchtigen Speicher (7) in den ersten nicht-flüchtigen Speicher (3) zu kopieren, so dass der zweite Programmcode (8) den ersten Programmcode (5) ersetzt und für einen nachfolgenden Start des Computersystems (1) zur Verfügung steht.

2. Computersystem (1) nach Anspruch 1,
**dadurch gekennzeichnet, dass**
der erste nicht-flüchtigen Speicher (3) zusätzlich einen unveränderlichen Speicherbereich aufweist, in dem Programmcode für einen Bootblock (6) gespeichert ist, wobei beim Starten des Computersystems (1) zunächst der Programmcode des Bootblocks (6) ausgeführt wird, bevor der erste oder zweite Programmcode (5, 8) ausgeführt wird.

3. Computersystem (1) nach Anspruch 2,
**dadurch gekennzeichnet, dass**
der Programmcode des Bootblocks (6) eine Integritätsprüfung für den ersten Programmcode (5) enthält, wobei bei erfolgreicher Integritätsprüfung der erste Programmcode (5) ausgeführt wird und bei erfolgloser Integritätsprüfung zunächst der zweite Programmcode (8) in den ersten nicht-flüchtigen Speicher (3) kopiert wird und dann ausgeführt wird.

4. Computersystem (1) nach einem der Ansprüche 1 bis 3,
**dadurch gekennzeichnet, dass**
in dem ersten und/oder zweiten nicht-flüchtigen Speicher (3, 7) zusätzlich Versionsinformationen für den ersten und zweiten Programmcode (5, 8) gespeichert sind und in dem Fall, dass der zweite Programmcode (8) aktueller als der erste Programmcode (5) ist, beim Starten des Computersystems (1) der zweite Programmcode (8) durch den Systemüberwachungsbaustein (4) in den ersten nicht-flüchtigen Speicher (3) kopiert wird.

5. Computersystem (1) nach einem der Ansprüche 1 bis 4,
**dadurch gekennzeichnet, dass**
der Systemüberwachungsbaustein (4) des Weiteren dazu eingerichtet ist, über die Netzwerkschnittstelle (11) empfangenen Programmcode als zweiten Programmcode (8) in dem zweiten nicht-flüchtigen Speicher (7) zu speichern.

6. Computersystem (1) nach Anspruch 5,
**dadurch gekennzeichnet, dass**
das Computersystem (1) ein Netzteil (15) mit einem Bereitschaftsmodus aufweist und in dem Bereitschaftsmodus wenigstens der Systemüberwachungsbaustein (4) und die Netzwerkschnittstelle (11) mit einer Betriebsspannung versorgt wird, so dass eine Aktualisierung des zweiten Programmcodes (8) in dem Bereitschaftsmodus durchführbar ist.

7. Verwendung eines zweiten nicht-flüchtigen Speichers (7) eines Systemüberwachungsbausteins (4) in einem Computersystem (1), aufweisend einen Prozessor (2) zum Ausführen von Programmcode, einen ersten nicht-flüchtigen Speicher (3) zum Speichern von erstem Programmcode (5) zum Starten des Computersystems (1) und eine Netzwerkschnittstelle (11) zum Verbinden des Computersystems (1) mit einem Netzwerk (12), wobei der Systemüberwachungsbaustein (4) zur Überwachung der Funktion und zur Fernwartung eines Computersystems (1) über das Netzwerk (12) eingerichtet ist, in einem Verfahren zum Aktualisieren von Programmcode zum Starten des Computersystems (1) umfassend:
- Ausführen von Programmcode eines Bootblocks (6) aus dem ersten nicht-flüchtigen Speicher (3) durch den Prozessor (2),
- Überprüfen, ob eine vorbestimmte Bedingung erfüllt ist, durch eine Datenverarbeitungseinheit des Systemüberwachungsbausteins (4), wobei im Schritt des Überprüfens ein Wiederherstellungsanzeiger (18) überprüft wird;
- wenn der Wiederherstellungsanzeiger nicht gesetzt ist:
- Ausführen von erstem Programmcode (5) zum Starten des Computersystems (1) aus dem ersten nicht-flüchtigen Speicher (3) durch den Prozessor (2),
- Feststellen, durch den Systemüberwachungsbaustein (4), ob der Prozessor nach einer vorbestimmten Zeit mit der Ausführung eines Betriebssystems des Computersystems beginnt, und
- beim Feststellen, dass der Prozessor nach der vorbestimmten Zeit nicht mit der Ausführung des Betriebssystems beginnt, Setzen des Wiederherstellungsanzeigers (18) durch den Systemüberwachungsbaustein (4) und
- wenn der Wiederherstellungsanzeiger gesetzt ist:
- Kopieren von zweitem Programmcode (8) zum Starten des Computersystems (1) aus dem zweiten nicht-flüchtigen Speicher (7) in den ersten nicht-flüchtigen Speicher (3) durch eine Datenverarbeitungseinheit des Systemüberwachungsbausteins (4),
- Zurücksetzen des Wiederherstellungsanzeigers durch den Systemüberwachungsbaustein und
- Ausführen des zweiten Programmcodes (8) durch den Prozessor (2).

8. Verwendung nach Anspruch 7, **dadurch gekennzeichnet, dass** durch das Verfahren zusätzlich die folgenden Schritte ausgeführt werden:
- Übertragen von aktualisiertem Programmcode an den Systemüberwachungsbaustein (4),
- Speichern des aktualisierten Programmcodes als zweiter Programmcode (8) im Systemüberwachungsbaustein (4) und
- Setzen des Wiederherstellungsanzeigers (18).

9. Computerprogramm für eine Datenverarbeitungseinheit eines Systemüberwachungsbausteins (4) zur Überwachung der korrekten Funktion und zur Fernwartung des Computersystems (1), wobei das Computersystem (1) einen in einem ersten nicht-flüchtigen Speicher (3) gespeicherten ersten Programmcode (5) zum Starten des Computersystems (1) aufweist, **dadurch gekennzeichnet, dass** bei der Ausführung des Computerprogramms durch die Datenverarbeitungseinheit des Systemüberwachungsbausteins (4) folgende Schritte ausgeführt werden:
- Erkennen, dass bei der Ausführung des ersten Programmcodes (5) ein nicht-behebbarer Fehler aufgetreten ist, weil der Systemüberwachungsbaustein (4) feststellt, dass der Prozessor (2) nach einer vorbestimmten Zeit nicht mit der Ausführung eines Betriebssystems beginnt und
- Kopieren von in einem zweiten nicht-flüchtigen Speicher (7) des Systemüberwachungsbausteins (4) gespeicherten zweiten Programmcode (8) zum Starten des Computersystems (1) in den ersten nicht-flüchtigen Speicher (3).

## Claims

1. Computer system (1), comprising
- a processor (2) for executing program code;
- a first non-volatile memory (3) for storing first program code (3) for starting the computer system (1), wherein the first non-volatile memory (3) is operatively connected with the processor (2), and
- a network interface (11) for connecting the computer system (1) with a network (12),
**characterized by**
- a system monitoring module (4), which is operatively connected with the processor (2), the network interface (11) and the first non-volatile memory (3) and configured to monitor the computer system for proper functioning and to remotely maintain the computer system (1) via the network (12),
wherein
- the system monitoring module (4) comprises a second non-volatile memory (7) in the form of a ROM or FLASH memory for storing second program code (8) for starting the computer system (1), and
- the system monitoring module (4) is configured to determine whether the processor (2) starts executing an operating system of the computer system (1) after a predetermined time, and, upon determination that the processor (2) does not start executing the operating system after the predetermined time, to copy the second program code (8) from the second non-volatile memory (7) into the first non-volatile memory (3), so that the second program code (8) replaces the first program code (5) and is available for a subsequent start of the computer system (1) .

2. Computer system (1) according to claim 1,
**characterized in that**
the first non-volatile memory (3) additionally comprises an unchangeable memory area in which program code for a bootblock (6) is stored, wherein, upon starting the computer system (1), the program code of the bootblock (6) is executed first before the first or second program code (5, 8) is executed.

3. Computer system (1) according to claim 2,
**characterized in that**
the program code of the bootblock (6) contains an integrity check for the first program code (5), wherein the first program code (5) is executed in the event of a successful integrity check and, in the event of an unsuccessful integrity check, first the second program code (8) is copied into the first non-volatile memory (3) and then executed.

4. Computer system (1) according to one of claims 1 to 3,
**characterized in that**
in the first and/or second non-volatile memory (3, 7), additionally version information for the first and second program code (5, 8) is stored, and in the event that the second program code (8) is more up-to-date than the first program code (5), the second program code (8) is copied into the first non-volatile memory (3) by the system monitoring module (4) upon starting the computer system (1).

5. Computer system (1) according to one of claims 1 to 4,
**characterized in that**
the system monitoring module (4) is further configured to store program code, received via the network interface (11), in the second non-volatile memory (7) as the second program code (8).

6. Computer system (1) according to claim 5,
**characterized in that**
the computer system (1) comprises a power supply unit (15) with a standby mode and, in the standby mode, at least the system monitoring module (4) and the network interface (11) are supplied with an operating voltage, so that an update of the second program code (8) can be performed in the standby mode.

7. Use of a second non-volatile memory (7) of a system monitoring module (4) in a computer system (1), comprising a processor (2) for executing program code, a first non-volatile memory (3) for storing first program code (5) for starting the computer system (1), and a network interface (11) for connecting the computer system (1) with a network (12), wherein the system monitoring module (4) is configured to monitor the functioning and to remotely maintain a computer system (1) via the network (12), in a method for updating program code for starting the computer system (1), including:
- executing, by the processor (2), program code of a bootblock (6) from the first non-volatile memory (3),
- verifying whether a predetermined condition is satisfied, by a data processing unit of the system monitoring module (4), wherein a recovery indicator (18) is verified in the verification step;
- if the recovery indicator has not been set:
- executing first program code (5) for starting the computer system (1) from the first non-volatile memory (3) by the processor (2),
- determining, by the system monitoring module (4), whether the processor starts executing an operating system of the computer system after a predetermined time, and
- upon determining that the processor does not start executing the operating system after the predetermined time, setting the recovery indicator (18) by the system monitoring module (4), and
- if the recovery indicator has been set:
- copying second program code (8) for starting the computer system (1) from the second non-volatile memory (7) into the first non-volatile memory (3) by a data processing unit of the system monitoring module (4),
- resetting the recovery indicator by the system monitoring module, and
- executing the second program code (8) by the processor (2).

8. Use according to claim 7, **characterized in that** the following steps can additionally be performed by the method:
- transmitting updated program code to the system monitoring module (4),
- storing the updated program code in the system monitoring module (4) as the second program code (8), and
- setting the recovery indicator (18).

9. A computer program for a data processing unit of a system monitoring module (4) for monitoring the proper functioning and remote maintenance of the computer system (1), wherein the computer system (1) comprises first program code (5) stored in a first non-volatile memory (3) and for starting the computer system (1), **characterized in that** the following steps are carried out when the computer program is executed by the data processing unit of the system monitoring module (4):
- recognizing that a non-rectifiable error has occurred during execution of the first program code (5), because the system monitoring module (4) determines that the processor (2) does not start executing the operating system after a predetermined time, and
- copying into the first non-volatile memory (3) a second program code (8) for starting the computer system (1), which code is stored in a second non-volatile memory (7) of the system monitoring module (4).

## Revendications

1. Système informatique (1) présentant
- un processeur (2) destiné à exécuter des codes de programme,
- une première mémoire (3) non volatile destinée à mémoriser le premier code de programme (5) pour le démarrage du système informatique (1), la première mémoire (3) non volatile étant reliée au processeur (2) de manière fonctionnelle, et
- une interface de réseau (11) destinée à relier le système informatique (1) à un réseau (12),
**caractérisé par**
- un module de surveillance de système (4) qui est relié de manière fonctionnelle au processeur (2), à l'interface de réseau (11) et à la première mémoire (3) non volatile et est configuré pour la surveillance du fonctionnement correct et pour la télémaintenance du système informatique (1) par l'intermédiaire du réseau (12),
- le module de surveillance de système (4) présentant une deuxième mémoire (7) non volatile sous forme d'une mémoire ROM ou flash, destinée à mémoriser le deuxième code de programme (8) pour le démarrage du système informatique (1), et
- le module de surveillance de système (4) étant configuré pour constater si le processeur (2), après un temps prédéterminé, commence d'exécuter un système d'exploitation du système informatique (1), et lors de la constatation que le processeur (2) ne commence pas d'exécuter le système d'exploitation après le temps prédéterminé, pour copier le deuxième code de programme (8) dans la première mémoire (3) non volatile à partir de la deuxième mémoire (7) non volatile, de sorte que le deuxième code de programme (8) remplace le premier code de programme (5) et est disponible pour un démarrage subséquent du système informatique (1).

2. Système informatique (1) selon la revendication 1,
**caractérisé en ce que**
la première mémoire (3) non volatile présente en outre un espace mémoire non modifiable dans lequel le code de programme est mémorisé pour un bloc de démarrage (6), le code de programme du bloc de démarrage (6), lors du démarrage du système informatique (1), étant d'abord exécuté avant que le premier ou le deuxième code de programme (5, 8) ne soit exécuté.

3. Système informatique (1) selon la revendication 2,
**caractérisé en ce que**
le code de programme du bloc de démarrage (6) contient un contrôle d'intégrité pour le premier code de programme (5), le premier code de programme (5) étant exécuté lors de la réussite du contrôle d'intégrité et, lors de l'échec du contrôle d'intégrité, d'abord le deuxième code de programme (8) étant copié dans la première mémoire (3) non volatile et étant ensuite exécuté.

4. Système informatique (1) selon l'une quelconque des revendications 1 à 3,
**caractérisé en ce que**
dans la première et/ou la deuxième mémoires (3, 7) non volatiles, des informations de version sont mémorisées en plus pour le premier et le deuxième codes de programme (5, 8), et **en ce qu'**au cas où le deuxième code de programme (8) soit plus actuel que le premier code de programme (5), le deuxième code de programme (8), lors du démarrage du système informatique (1), est copié dans la première mémoire (3) non volatile par le module de surveillance de système (4).

5. Système informatique (1) selon l'une quelconque des revendications 1 à 4,
**caractérisé en ce que**
le module de surveillance de système (4) est en outre configuré pour mémoriser dans la deuxième mémoire (7) non volatile en tant que deuxième code (8) le code de programme reçu par l'intermédiaire de l'interface de réseau (11).

6. Système informatique (1) selon la revendication 5,
**caractérisé en ce que**
le système informatique (1) présente un bloc d'alimentation (15) doté d'un mode de veille et **en ce qu'**en mode de veille, au moins le module de surveillance de système (4) et l'interface de réseau (11) sont alimentés avec une tension de service, de sorte qu'une mise à jour du deuxième code de programme (8) est réalisable en mode de veille.

7. Utilisation d'une deuxième mémoire (7) non volatile d'un module de surveillance de système (4) dans un système informatique (1), présentant un processeur (2) destiné à exécuter des codes de programme, une première mémoire (3) non volatile destinée à mémoriser le premier code de programme (5) pour le démarrage du système informatique (1), et une interface de réseau (11) destinée à relier le système informatique (1) à un réseau (12), le module de surveillance de système (4) étant configuré pour la surveillance du fonctionnement et pour la télémaintenance d'un système informatique (1) par l'intermédiaire du réseau (12) dans un procédé de mise à jour de codes de programme pour le démarrage du système informatique (1) comprenant :
- exécution par le processeur (2) de codes de programme d'un bloc de démarrage (6) à partir de la première mémoire (3) non volatile,
- vérification par une unité de traitement de données du module de surveillance de système (4) si une condition prédéterminée est remplie, un indicateur de récupération (18) étant vérifié à l'étape de la vérification ;
- lorsque l'indicateur de récupération n'est pas mis :
- exécution par le processeur (2) du premier code de programme (5) pour le démarrage du système informatique (1) à partir de la première mémoire (3) non volatile,
- constatation par le module de surveillance de système (4) si le processeur, après un temps prédéterminé, commence d'exécuter un système d'exploitation du système informatique, et
- lors de la constatation que le processeur, après le temps prédéterminé, ne commence pas d'exécuter le système d'exploitation, mise de l'indicateur de récupération (18) par le module de surveillance de système (4), et
- lorsque l'indicateur de récupération est mis :
- copie dans la première mémoire (3) non volatile, par une unité de traitement de données du module de surveillance de système (4), du deuxième code de programme (8) pour le démarrage du système informatique à partir de la deuxième mémoire (7) non volatile
- remise à zéro de l'indicateur de récupération par le module de surveillance de système, et
- exécution du deuxième code de programme (8) par le processeur (2).

8. Utilisation selon la revendication 7, **caractérisée en ce que** les étapes suivantes sont en outre exécutées par le procédé :
- transmission au module de surveillance de système (4) du code de programme mis à jour en tant que deuxième code de programme (8), et
- mémoriser dans le module de surveillance de système (4) le code de programme mis à jour en tant que deuxième code de programme (8) et
- mise de l'indicateur de récupération (18).

9. Programme informatique pour une unité de traitement de données d'un module de surveillance de système (4) destiné à la surveillance du fonctionnement correct et à la télémaintenance du système informatique (1), le système informatique (1) présentant un premier code de programme (5) mémorisé dans une première mémoire (3) non volatile, destiné au démarrage du système informatique (1), **caractérisé en ce que** lors de l'exécution du programme informatique par l'unité de traitement de données du module de surveillance de système (4), les étapes suivantes sont exécutées :
- identification, lors de l'exécution du premier code de programme (5), qu'une erreur irréversible s'est produite parce que le module de surveillance de système (4) constate que le processeur (2), après un temps prédéterminé, ne commence pas d'exécuter un système d'exploitation, et
- copie dans la première mémoire (3) non volatile du deuxième code de programme (8) mémorisé dans une deuxième mémoire (7) non volatile du module de surveillance de système (4), destiné au démarrage du système informatique (1) .
